# FASCICULE DE BREVET EUROPEEN

(11) **EP 1 156 360 B1**
(45) Date de publication et mention de la délivrance du brevet: **18.01.2017**
(21) Numéro de dépôt: 00201733.3
(22) Date de dépôt: 16.05.2000
(51) Int. Cl.: G02F 1/1335, G02F 1/1347, G04G 9/00

(54) **Ensemble d'affichage à inversion chromatique de contraste**
Anzeigeeinheit mit chromatischer Kontrastumkehrung
Display unit with chromatic contrast inversion

(43) Date de publication de la demande: 21.11.2001
(73) Titulaire: ASULAB S.A., 2074 Marin (CH)
(72) Inventeur: Basturk, Naci, 2073 Enges (CH)
(74) Mandataire: Goulette, Ludivine

(56) Documents cités:
- EP-A- 0 052 000
- EP-A- 0 926 574
- EP-A- 0 930 522
- WO-A1-99/32945
- DE-A- 3 034 181
- PATENT ABSTRACTS OF JAPAN vol. 1999, no. 10, 31 août 1999 (1999-08-31) & JP 11 142837 A (SEIKO EPSON CORP), 28 mai 1999 (1999-05-28)

## Description

La présente invention concerne un ensemble d'affichage permettant d'obtenir une inversion chromatique de contraste au moyen de deux dispositifs d'affichage superposés comprenant un premier affichage à l'avant duquel se trouve un deuxième affichage formé par un agencement particulier de polariseurs fixes et de cellules à cristaux liquides dont les configurations de commutation commandent l'inversion chromatique.

L'invention concerne également une pièce d'horlogerie pourvue d'un tel agencement d'affichage dans lequel le premier affichage est formé par le cadran de ladite pièce d'horlogerie.

L'invention concerne plus particulièrement une telle pièce d'horlogerie dans laquelle le cadran comporte un affichage analogique de l'heure courante sur fond sombre, le deuxième affichage étant prévu pour délivrer d'autres informations horaires ou non horaires, lesdites informations pouvant être observées dans deux couleurs différentes.

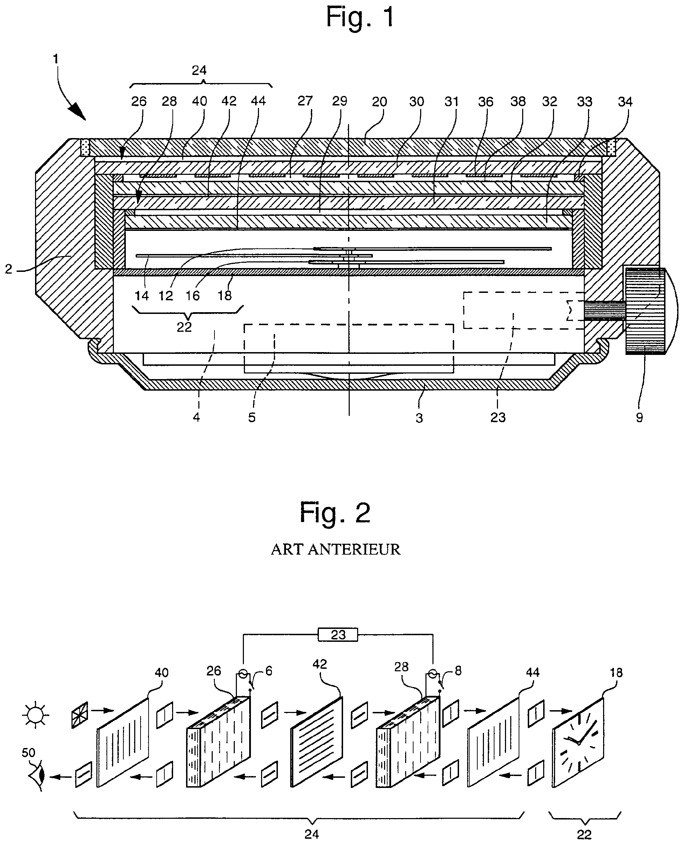

On connaît déjà par les brevets EP0926574 et WO99/32945 au nom de la demanderesse un ensemble d'affichage comprenant deux dispositifs d'affichage superposés, le dispositif orienté vers l'observateur pouvant prendre deux états différents dans lesquels l'un des dispositifs d'affichage est visible à l'exclusion de l'autre. Un tel ensemble d'affichage incorporé dans une montre-bracelet est schématiquement représenté à la figure 1 et son principe de fonctionnement est donné par la figure 2.

La montre représentée à la figure 1, désignée par la référence générale 1, comprend classiquement une carrure 2, un fond 3 et une glace 20 délimitant ensemble une boîte dans la partie inférieure de laquelle sont disposés un mouvement d'horlogerie électronique 4 alimenté par une pile 5. Le mouvement 4 comprend un circuit électronique garde-temps associé à un dispositif d'entraînement (non représenté), des aiguilles 12, 14 et 16, heures, minutes, secondes se déplaçant au-dessus d'un cadran 18 portant des index horaires (non représentés).

Les aiguilles 12, 14 et 16 et le cadran 18 constituent le premier dispositif d'affichage, de type analogique dans l'exemple illustré, désigné par la référence générale 22.

Cette montre-bracelet 1 comprend en outre un deuxième affichage de type digital, désigné par la référence générale 24 et disposé entre le cadran 18 et la glace 20. En se référant également à la figure 2, on voit que le deuxième affichage 24 est composé d'une structure de type "sandwich" comprenant, en allant de la glace 20 au cadran 18, un polariseur linéaire absorbant 40, une cellule d'affichage à cristaux liquides 26, un polariseur linéaire absorbant 42 croisé avec le polariseur 40, une valve optique à cristaux liquides 28 et un polariseur réflectif 44 croisé avec le polariseur 42. Les états de commutation de la cellule et de la valve du deuxième affichage sont commandés par une unité de gestion 23 en fonction des manipulations effectuées sur au moins un organe de commande extérieur 9.

La cellule d'affichage 26 comprend de façon classique un substrat avant 30 transparent, un substrat arrière 32 également transparent et un cadre de scellement 34 formant des moyens d'espacement et de fermeture délimitant avec les substrats 30 et 32 une cavité fermée contenant des cristaux liquides 27. Les faces en regard des substrats 30 et 32 comprennent des électrodes transparentes respectivement 36 et 38 réalisées par exemple en ITO. Dans l'exemple illustré, l'électrode arrière 38 s'étend sur toute la surface du substrat 32 et l'électrode avant 36 est configurée en segments adressables séparément au moyen de l'unité de gestion 23, l'état activé (ON) ou non activé (OFF) étant symbolisé par le contacteur 6 (figure 2). Cette cellule 26 permet donc d'afficher des caractères alphanumériques en faisant passer les cristaux liquides 27 d'un état transparent à un état absorbant, ou inversement selon le type de cristaux liquides utilisés. Comme on le comprendra par la suite, dans l'application à une montre-bracelet où l'économie d'énergie a une grande importance, on préférera utiliser des cristaux liquides conférant à la cellule un état transparent lorsqu'aucune tension n'est appliquée et un état absorbant lorsqu'une tension est appliquée.

La valve optique 28, contenant des cristaux liquides 29 et ayant un contacteur 8, a une structure comparable à celle de la cellule 26 et n'en diffère qu'en ce que les deux électrodes transparentes recouvrent totalement les faces en regard du substrat supérieur 31 et du substrat inférieur 33, de sorte que la valve 28 peut passer d'un état totalement transparent à un état totalement absorbant, ou inversement selon le type de cristaux liquides utilisés. Pour la raison indiquée précédemment, on choisira de préférence des cristaux liquides 29 de façon à avoir un état transparent en l'absence de tension.

Les exemples décrits dans les documents EP0926574 et WO99/32945 ne suggèrent, pour le but recherché par cette invention, que deux configurations de commutation. Dans la configuration OFF-OFF, représentée à la figure 2, le lecteur comprendra facilement en suivant le cheminement des rayons lumineux à travers les polariseurs 40, 42, 44 et de façon intermédiaire la cellule 26 et la valve 28 que le cadran à affichage analogique 18 est visible, quelle que soit sa teinte claire ou foncée. Selon une deuxième configuration ON-ON, non représentée, le fond d'affichage est constitué par le polariseur réflectif 44, en raison de la rotation de 90° imprimée par la valve 28 à la lumière polarisée incidente, et les segments d'affichage apparaissent en sombre en raison de l'absorption par le polariseur 42 des rayons incidents ayant subi une rotation de 90° en traversant lesdits segments activés de la cellule 26, de sorte que le deuxième affichage apparaît en sombre su fond miroir. Ce changement d'état de commutation de OFF-OFF à ON-ON permet d'obtenir une inversion du type d'affichage, mais pas une inversion de contraste et encore moins une inversion de contraste chromatique. Il en serait de même en modifiant l'orientation relative à des polariseurs. Pour tenter d'obtenir une inversion de contraste, même sans effet chromatique, l'homme de métier peut naturellement songer à essayer, sans modifier la construction divulguée par le document précité, la configuration de commutation ON-OFF. Par rapport à la configuration ON-ON précitée, le deuxième affichage est inchangé, et apparaît sur le fond de cadran au lieu de fond miroir, mais il n'y a toujours pas d'inversion de contraste.

La présente invention a donc pour objet de procurer un agencement particulier permettant d'inverser avec une autre couleur la couleur de l'information affichée ou celle du fond sur lequel elle est affichée.

A cet effet, l'invention a pour objet un ensemble d'affichage comprenant un premier dispositif d'affichage à l'avant duquel est disposé un deuxième dispositif d'affichage actif à cristaux liquides. Ce deuxième dispositif d'affichage est caractérisé en ce qu'il comprend, en allant depuis l'extérieur vers le premier affichage un polariseur avant sélectif d'une première couleur, une cellule d'affichage matriciel ou à segments à cristaux liquides, un polariseur intermédiaire sélectif d'une deuxième couleur, une valve optique à cristaux liquides et un polariseur arrière réflectif si le premier affichage a un fond sombre, et absorbant si le premier affichage a un fond clair. Une unité de gestion permet de sélectionner deux états de commutation de la cellule et deux états de commutation de la valve en produisant une inversion chromatique, soit au niveau de l'information affichée, soit au niveau du fond sur lequel ladite information est affichée. Lorsque le polariseur intermédiaire est croisé avec le polariseur avant et avec le polariseur arrière, l'inversion chromatique est observée au niveau de l'information. Lorsque le polariseur intermédiaire est parallèle aux deux autres polariseurs, l'inversion chromatique est observée au niveau du fond. Pour obtenir le meilleur contraste possible, il est préférable de choisir deux couleurs complémentaires pour les polariseurs sélectifs avant et intermédiaire.

Selon un autre aspect de l'invention, lorsque la cellule n'est pas commutée (état OFF) en ne délivrant donc aucune information, et en fonction de l'état de commutation (ON/OFF) de la valve, l'ensemble d'affichage permet de rendre visible seulement le premier affichage ou de le masquer totalement par un masque miroir. Comme on le verra dans la description détaillée qui suit, cet ensemble d'affichage est particulièrement bien adapté à une montre-bracelet, car il est possible d'avoir une configuration de commutation OFF-OFF ne consommant pas d'énergie et permettant d'avoir visible en permanence une information de l'heure courante sur le premier affichage, et de pouvoir faire apparaître sur demande deux autres types d'informations sur le deuxième affichage, facilement différenciables par l'inversion chromatique. Ces informations peuvent être des grandeurs temporelles complémentaires de celles données par le premier affichage, ou des grandeurs non temporelles telles que les valeurs de systèmes capteurs contenus dans la boîte de la pièce d'horlogerie.

D'autres caractéristiques et avantages de la présente invention apparaîtront plus clairement à la lecture des exemples de réalisation et de fonctionnement qui suivent, en référence aux dessins annexés dans lesquels :
- la figure 1 est une vue en coupe d'une montre-bracelet comportant un ensemble d'affichage ayant deux affichages superposés,
- la figure 2 est une représentation schématique d'un mode de fonctionnement selon l'art antérieur,
- la figure 3 est le schéma explicatif d'un mode de fonctionnement selon l'invention,
- les figures 4 à 7 représentent schématiquement les quatre configurations de commutations possibles d'un ensemble d'affichage selon l'invention et les aspects visuels correspondants, et
- la figure 8 représente un mode de réalisation dans lequel une configuration de commutations permet d'obtenir une double inversion chromatique.

La construction de l'ensemble d'affichage selon la présente invention est comparable à celle qui a été décrite en référence à la figure 1 dans le cadre de l'application à une montre-bracelet. Elle en diffère toutefois en ce que le polariseur avant est un polariseur sélectif 11 d'une première couleur "V", le polariseur intermédiaire est un polariseur sélectif 13 d'une deuxième couleur "R" et le polariseur arrière est un polariseur réflectif 15 si le premier affichage, maintenant désigné par la référence 17 a une teinte sombre et un polariseur absorbant si le premier affichage a une teinte claire. Comme indiqué précédemment, elle comporte donc une unité de gestion 23 qui, en fonction des manipulations effectuées sur un organe de commande extérieur 9, va commander au moyen du contacteur 6 de la valve 26 et du contacteur 8 de la valve 28 les configurations de commutation.

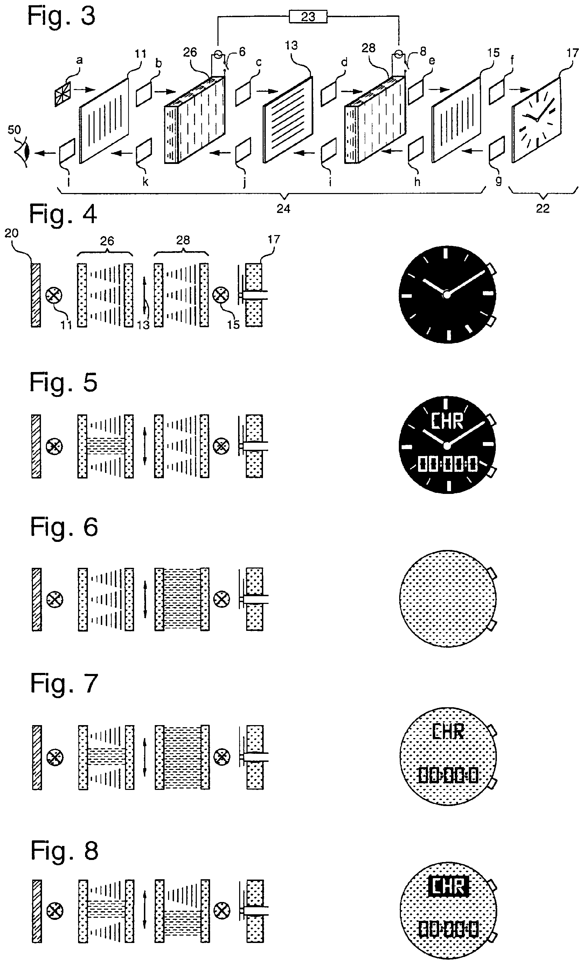

Dans le premier exemple qui va être décrit, en référence à la figure 3, le polariseur intermédiaire 13 est croisé avec le polariseur avant 11 et le polariseur arrière 15, les couleurs "V" et "R" étant les couleurs complémentaires verte et rouge, et le premier affichage est constitué par un cadran à affichage analogique de teinte sombre.

L'invention consiste à exploiter de manière surprenante le caractère imparfait des polariseurs sélectifs de couleur tant au niveau de la polarisation, qu'au niveau de sélection d'une couleur déterminée "V" ou "R", comme brièvement résumé ci-après pour un polariseur sélectif vert.

Une lumière monochromatique verte non polarisée traversant un polariseur sélectif vert subit globalement une polarisation à 50% de sorte que la lumière transmise est reconstituée en lumière verte non polarisée. Si la lumière incidente est polarisée parallèlement à l'axe de polarisation du polariseur, elle est transmise à 100%. Si elle est polarisée perpendiculairement à l'axe de polarisation, elle est transmise avec la même polarisation mais avec une forte atténuation de x%, pouvant être estimée à 5%.

Si maintenant la lumière incidente sur le polariseur sélectif vert est une lumière monochromatique rouge, elle est transmise selon l'axe de polarisation du polariseur avec une atténuation de y% pouvant être estimée à 40%. Si la lumière rouge est polarisée parallèlement au polariseur vert, elle sera transmise selon le même axe de polarisation avec une atténuation moins forte de z% pouvant être estimée à 80%. Si la lumière rouge est polarisée perpendiculairement au polariseur vert, on peut considérer qu'elle est totalement absorbée.

De façon équivalente, on retrouve les coefficients d'atténuation x, y, z pour une lumière incidente rouge ou verte sur un polariseur sélectif rouge.

En ce qui concerne le premier affichage, lorsqu'il est de teinte sombre on considère qu'il réfléchit seulement w% de la lumière incidente, quelle que soit sa longueur d'onde, cette valeur pouvant être estimée à 2%. Lorsqu'il est de teinte claire, on peut considérer qu'il réfléchit la lumière à 100%. On considérera enfin que le polariseur réflectif transmet, quelle que soit la longueur d'onde 100% de la lumière polarisée selon son axe de polarisation, et inversement réfléchit 100% de la lumière polarisée perpendiculairement.

Il est bien évident, comme on le verra dans les exemples qui suivent que la combinaison de ces différents coefficients va déterminer un taux indicatif d'atténuation globale, c'est-à-dire une teinte dominante verte ou rouge, mais que ce taux ne correspond pas à l'intensité lumineuse observée étant donné qu'il faut également tenir compte d'une part des autres longueurs d'onde de la lumière naturelle non polarisée et de la sensibilité propre de l'oeil à chaque longueur d'onde.

### Exemple 1

Dans un premier mode de réalisation correspondant au schéma de la figure 3, déjà décrit, on a représenté à l'avant par un rectangle désigné par la lettre a, une lumière non polarisée qu'on considérera, pour plus de clarté par la suite, comme composée uniquement de vert "V" et de rouge "R". Les rectangles suivants, désignés par les lettres b et l représentent les états des deux longueurs d'onde "V" et "R" après chaque élément constitutif de l'ensemble d'affichage, jusqu'au rectangle l qui correspond à l'effet qui peut être observé. Dans le tableau 1 ci-après, on a reporté les différents états de a à l pour une première configuration de commutation OFF-OFF, correspondant aux figures 3 et 4 et pour une deuxième configuration de commutation ON-OFF correspondant à la figure 5.

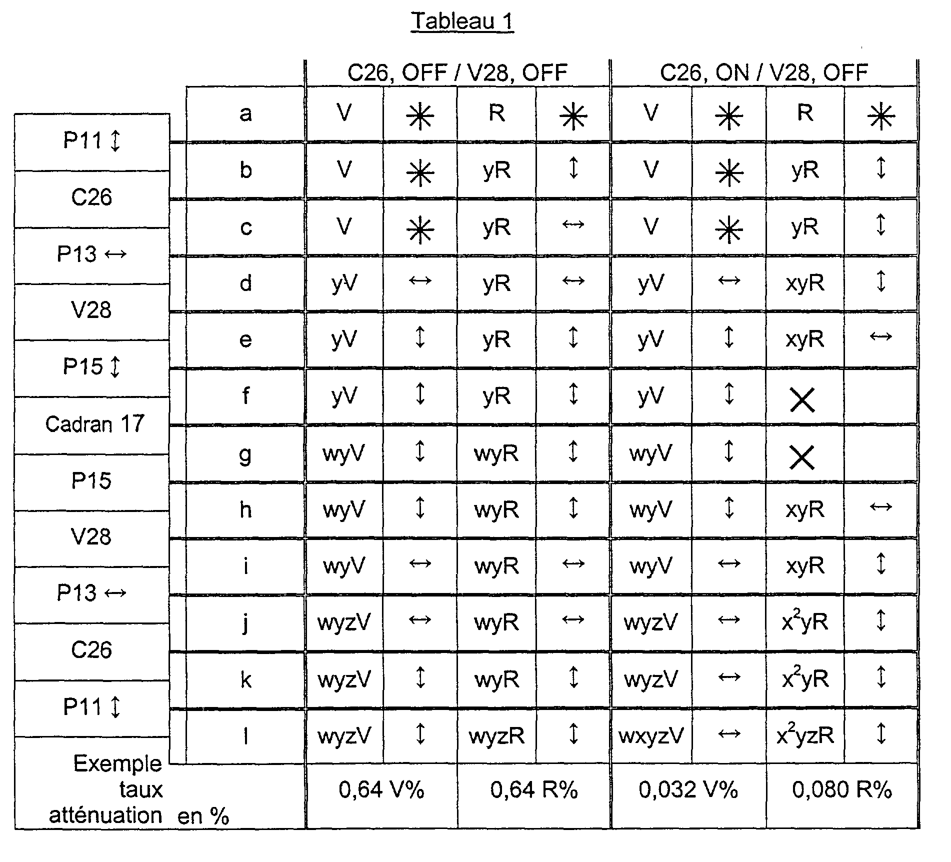

Dans la configuration OFF-OFF, la couleur verte "V" n'est pas modifiée jusqu'au polariseur sélectif rouge P13 où elle est polarisée horizontalement et atténuée d'un coefficient y. Dans l'état e, la valve 28 a fait subir une rotation de 90° et la lumière verte est alors polarisée parallèlement à l'axe du polariseur réflectif 15 qu'elle traverse pour frapper le cadran 17 et être réfléchie dans l'état g avec une nouvelle atténuation w. Elle traverse une deuxième fois sans modification le polariseur 15 puis la valve 28 en subissant une nouvelle rotation de 90°, de sorte qu'elle arrive dans un état l avec un axe de polarisation parallèle à celui du polariseur sélectif rouge 13 qu'elle traverse en subissant une nouvelle atténuation z. En traversant la cellule 26, son axe de polarisation est réorienté de 90° pour arriver dans un état k parallèlement à l'axe de polarisation du polariseur sélectif vert 11 qu'elle traverse sans modification. La composante verte observable dans l'état l peut donc être exprimée par wyzV.

En suivant maintenant le trajet de la composante rouge "R", on voit qu'elle est d'abord dans l'état b polarisée parallèlement au polariseur sélectif vert 11 en subissant une atténuation y, puis dans l'état c une rotation de 90° en traversant la cellule 26 pour arriver avec un axe de polarisation parallèle à celui du polariseur sélectif rouge 13 qu'elle traverse sans modification. La valve 28 va faire subir une nouvelle rotation de 90° de sorte que la composante rouge traverse le polariseur réflectif 15 sans modification pour être réfléchie par le cadran 17 dans un état g avec une nouvelle atténuation w. Jusqu'à l'état k, la valve 28 puis la cellule 26 vont imprimer deux rotations de 90° de sorte que la composante rouge arrive parallèlement au polariseur sélectif vert 11 qu'elle traverse en subissant une nouvelle atténuation z. La composante rouge observable dans l'état l peut donc être exprimée par wyzR. On constate donc que les deux composantes verte "V" et rouge "R" ont subies le même taux d'atténuation "wyz", ce qui recompose la lumière naturelle, étant donné que le même phénomène se produira pour toutes les autres paires de couleurs/couleurs complémentaires, avec évidemment des taux d'atténuation différents.

Ainsi dans la configuration de commutation OFF-OFF, le cadran sombre 17 qui constitue le premier dispositif d'affichage est visible comme représenté à la figure 4.

En se référant maintenant à la figure 5, on a représenté le schéma de la configuration de commutation ON-OFF et l'aspect observable. Les deux colonnes de droite du tableau 1 donnent les états de a à l des deux composantes verte "V" et rouge "R" pour la partie d'affichage correspondant aux segments commutés de la cellule 26.

En suivant, comme cela a été fait pour la configuration de commutation OFF-OFF, le cheminement de la composante verte "V", on voit qu'elle subit successivement les atténuations y dans l'état d, w dans l'état g et z dans l'état l, c'est-à-dire que la composante verte observable peut être exprimée par wxyzV. En suivant maintenant le cheminement de la composante rouge "R", on voit qu'elle subit une atténuation y dans l'état c, une autre atténuation x dans l'état e, qu'elle est réfléchie par le polariseur réflectif 15 et qu'elle subit encore successivement les atténuations x dans l'état i et z dans l'état l, de sorte que la composante rouge observable peut être exprimée par x²yzR.

En retenant pour les coefficients d'atténuation wxyz les valeurs moyennes indiquées au début, on voit que la composante rouge observable s'exprime par 0,080R% et la composante verte par 0,032V%, c'est-à-dire que la couleur rouge est dominante. Dans cette configuration ON-OFF de commutation, l'information du deuxième affichage apparaît donc en rouge sur le fond sombre de cadran.

On se réfère maintenant aux schémas explicatifs des figures 6 et 7 et au tableau 2 ci-après.

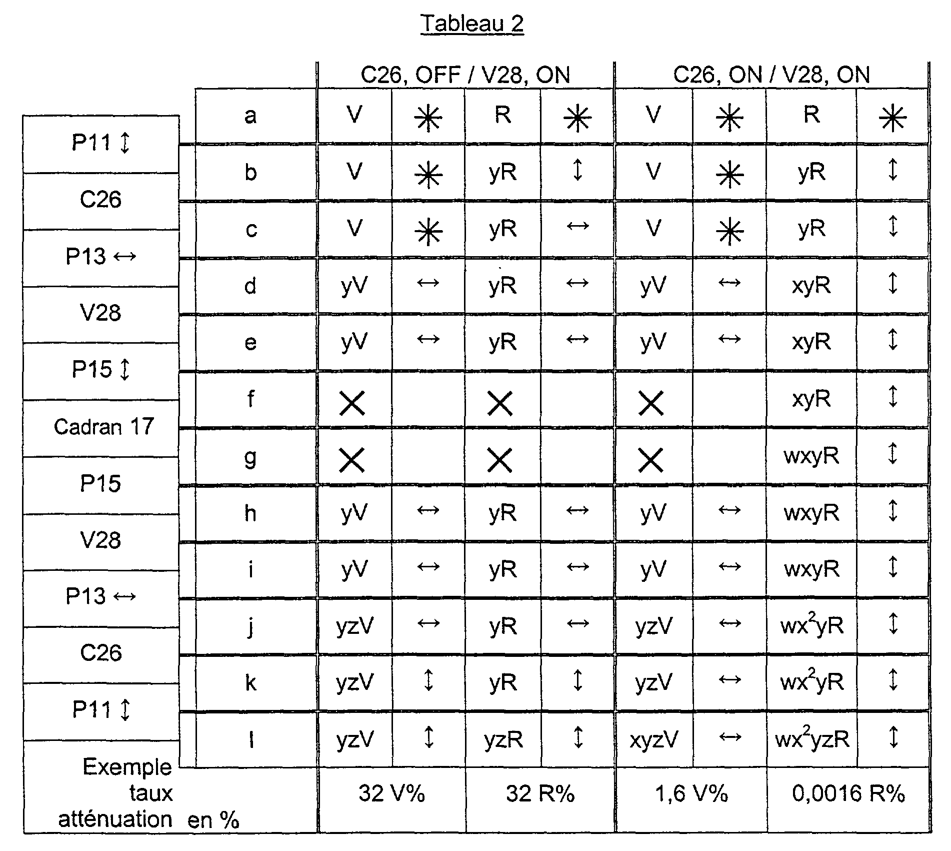

La configuration de commutation OFF-ON, dans laquelle aucune information ne peut être affichée par la cellule 26, correspond à la figure 6 et aux deux premières colonnes du tableau 2. En suivant comme précédemment le cheminement de la composante verte et de la composante rouge, on voit que la commutation ON de la valve 28 oriente la polarisation des deux composantes rouge et verte perpendiculairement à l'axe de polarisation du polariseur réflectif 15 de sorte qu'elles seront toutes les deux réfléchies et se trouveront dans l'état L avec le même taux d'atténuation yz, c'est-à-dire, comme indiqué précédemment, elles vont permettre de recomposer la lumière naturelle. Dans cette configuration, aucune information n'est affichée et l'observateur voit seulement un fond miroir, ce qui peut être un effet esthétique recherché, en particulier dans une pièce d'horlogerie.

La configuration ON-ON correspond à la figure 7 et aux deux dernières colonnes du tableau 2. On voit que la composante verte subit une première atténuation y dans l'état d, qu'elle est réfléchie par la polariseur réflectif 15, puis qu'elle subit successivement deux atténuations, z dans l'état i et x dans l'état l, de sorte que la composante verte observable peut s'exprimer par xyzV. La composante rouge subit une succession d'atténuations, y compris par la teinte sombre du cadran 17, de sorte que la composante rouge observable en l peut s'exprimer par wx²yzR. En retenant pour les coefficients d'atténuation les valeurs indiquées au début, on peut constater que la composante verte est très nettement dominante. Dans cette configuration ON-ON de commutation, l'information du deuxième affichage apparaît donc en vert sur fond miroir.

Ainsi en passant d'une configuration de commutation ON-OFF à une configuration ON-ON, on voit que l'ensemble d'affichage selon l'invention permet de permuter la couleur de l'information affichée par le deuxième affichage du rouge vers le vert.

En se référant enfin à la figure 8, on voit qu'il est possible de prévoir au niveau de la valve 28 au moins deux zones à commutation inversée, de sorte que le même ensemble d'affichage permette d'affiche en même temps une information rouge sur fond sombre et une information verte sur fond miroir.

### Exemple 3

Dans ce mode de réalisation, le polariseur intermédiaire 13 sélectif de la couleur rouge est parallèle à la fois au polariseur avant 11 sélectif de la couleur verte et au polariseur arrière 15 réflectif. Cette construction ne fait pas l'objet d'une figure car elle peut facilement être comprise à partir du schéma de la figure 3, par simple rotation du polariseur intermédiaire de 90°. Ce mode de réalisation permet d'obtenir une inversion chromatique du fond sur lequel s'affichage l'information du deuxième affichage, comme cela est brièvement expliqué en référence au tableau 3 correspondant à deux configurations de commutation OFF-OFF et ON-ON.

**Tableau 3**

| | | | C26, OFF / V28, OFF | | | | C26, ON / V28, ON | | | |
|---|---|---|---|---|---|---|---|---|---|---|
| | | a | V | ∗ | R | ∗ | V | ∗ | R | ∗ |
| P11 ↕ | | | | | | | | | | |
| | | b | V | ∗ | yR | ↕ | V | ∗ | yR | ↕ |
| C26 | | | | | | | | | | |
| | | c | V | ∗ | yR | ↔ | V | ∗ | yR | ↕ |
| P13 ↔ | | | | | | | | | | |
| | | d | yV | ↕ | xyR | ↔ | yV | ↔ | yR | ↕ |
| V28 | | | | | | | | | | |
| | | e | yV | ↔ | xyR | ↕ | yV | ↔ | yR | ↕ |
| P15 ↕ | | | | | | | | | | |
| | | f | × | | xyR | ↕ | yV | | yR | ↕ |
| Cadran 17 | | | | | | | | | | |
| | | g | × | | xyR | ↕ | wyV | | wyR | ↕ |
| P15 | | | | | | | | | | |
| | | h | yV | ↔ | wxyR | ↕ | wyV | ↕ | wyR | ↕ |
| V28 | | | | | | | | | | |
| | | i | yV | ↕ | wxyR | ↔ | wyV | ↔ | wyR | ↕ |
| P13 ↔ | | | | | | | | | | |
| | | j | yzV | ↕ | wxyR | ↔ | wyzV | ↔ | wyR | ↕ |
| C26 | | | | | | | | | | |
| | | k | yzV | ↔ | wx²yR | ↕ | wyzV | ↔ | wyR | ↕ |
| P11 ↕ | | | | | | | | | | |
| | | l | xyzV | ↔ | wx²yR | ↕ | wyzV | ↔ | wyzR | ↕ |
| | | | | | | | | | | |
| Exemple taux atténuation en % | | | 1,6 V% | | 0,002 R% | | 0,64 V% | | 0,64 R% | |

Dans la configuration OFF-OFF correspondant aux deux premières colonnes du tableau 3, dans laquelle le deuxième affichage ne délivre aucune information, on voit que la composante verte est réfléchie par la polariseur réflectif 15 et qu'elle est observable dans l'état "l" avec un coefficient d'atténuation de xyz. La composante rouge frappe le cadran foncé et subit un plus grand nombre d'atténuation de sorte qu'elle est observable dans l'état "l" avec un coefficient d'atténuation de wx²yz. On remarquera que ces coefficients d'atténuation sont identiques à ceux obtenus dans la configuration ON-ON de l'exemple 1, mais que la couleur dominante verte forme le fond de l'affichage étant donné que la cellule 26 commutée OFF ne délivre aucune information.

Dans la configuration ON-ON, correspondant aux deux dernières colonnes du tableau 3, on observera que les coefficients d'atténuation des deux composantes verte et rouge sont identiques et égaux à ceux observés dans l'état OFF-OFF de l'exemple 1, de sorte que les segments commutés de la cellule 26 permettent de voir le fond sombre du cadran 17. En d'autres termes, cette configuration permet de faire apparaître en sombre sur fond vert l'information délivrée par le deuxième affichage.

Sans qu'il soit nécessaire de se référer à un nouveau tableau, le lecteur comprendra que la configuration OFF-ON permet d'obtenir un fond de couleur rouge avec les mêmes coefficients d'atténuation dans l'état ON-OFF de l'exemple 1, et que la configuration ON-OFF de ce mode de réalisation, qui a les mêmes coefficients d'atténuation que la configuration OFF-ON de l'exemple 1, permet de créer au niveau de chaque segment activé des "fenêtres" laissant apparaître un fond miroir, de sorte que l'information délivrée par le deuxième affichage apparaît en clair sur fond rouge.

Ainsi, on voit que ce mode de réalisation permet une inversion chromatique du fond sur lequel apparaît l'information, en passant d'une configuration de commutation ON-ON à une configuration ON-OFF ou inversement.

Bien évidemment, comme cela a été montré en référence à la figure 8 de l'exemple 1, il serait également possible d'obtenir une double inversion chromatique.

On observera enfin que, même si on retrouve, avec des configurations de commutation différentes, les mêmes coefficients d'atténuation, le cheminement de chaque composants rouge ou verte, et notamment l'axe de polarisation, peut être différent compte-tenu de l'orientation relative différente des polariseurs.

### Exemple 4

Dans ce mode de réalisation, le polariseur intermédiaire 13 sélectif de la couleur rouge est parallèle au polariseur avant 11 sélectif de la couleur verte, et croisé avec le polariseur arrière 15 réflectif. En suivant les enseignements des exemples précédents, le lecteur comprendra facilement que la configuration de commutation ON-OFF permet d'afficher l'information en sombre sur fond rouge et la configuration ON-ON en clair sur fond vert, c'est-à-dire d'obtenir encore une inversion chromatique du fond sur lequel 'information est affichée.

De même, en référence à ce qui a été dit pour l'exemple 2, le lecteur comprendra qu'en échangeant les couleurs des polariseurs sélectifs 11 et 13 dans les exemples 3 et 4, on obtiendra encore, pour une construction donnée une inversion chromatique, la seule différence se situant au niveau des configurations de commutation.

### Exemple 5

Dans le mode de réalisation qui va être décrit, le polariseur avant 11 est sélectif de la couleur verte "V", le polariseur intermédiaire 13 est sélectif de la couleur rouge "R" en étant croisé avec le polariseur avant 11, le polariseur arrière 15 est absorbant en étant croisé avec le polariseur intermédiaire 13 (c'est-à-dire parallèle au polariseur avant 11) et le premier affichage est constitué par un cadran 17 à affichage analogique de teinte claire. Comme indiqué au début, le coefficient "w" d'atténuation du cadran peut être évalué à la valeur 1 pour une teinte claire. Cette construction est celle représentée à la figure 3, et l'inversion chromatique qu'elle permet d'obtenir est expliquée en référence aux tableaux 4 et 5 ci-après, dans lesquels le coefficient "w" de valeur 1 n'est pas reporté.

**Tableau 4**

| | | | C26, OFF / V28, OFF | | | | C26, ON / V28, OFF | | | |
|---|---|---|---|---|---|---|---|---|---|---|
| | | a | V | ∗ | R | ∗ | V | ∗ | R | ∗ |
| P11↕ | | | | | | | | | | |
| | | b | V | ∗ | yR | ↕ | V | ∗ | yR | ↕ |
| C26 | | | | | | | | | | |
| | | c | V | ∗ | yR | ↔ | V | ∗ | yR | ↕ |
| P13 ↔ | | | | | | | | | | |
| | | d | yV | ↔ | yR | ↔ | yV | ↔ | xyR | ↕ |
| V28 | | | | | | | | | | |
| | | e | yV | ↕ | yR | ↕ | yV | ↕ | xyR | ↔ |
| P15 ↕ | | | | | | | | | | |
| | | f | yV | ↕ | yR | ↕ | yV | ↕ | | |
| Cadran 17 | | | | | | | | | | |
| | | g | yV | ↕ | yR | ↕ | yV | ↕ | | |
| P15 | | | | | | | | | | |
| | | h | yV | ↕ | yR | ↕ | yV | ↕ | | |
| V28 | | | | | | | | | | |
| | | i | yV | ↔ | yR | ↔ | yV | ↔ | | |
| P13 ↔ | | | | | | | | | | |
| | | j | yzV | ↔ | yR | ↔ | yzV | ↔ | | |
| C26 | | | | | | | | | | |
| | | k | yzV | ↕ | yR | ↕ | yzV | ↔ | | |
| P11 ↕ | | | | | | | | | | |
| | | l | yzV | ↕ | yzR | ↕ | xyzV | ↔ | | |
| | | | | | | | | | | |
| Exemple taux atténuation en % | | | 32 V% | | 32 V% | | 1,6 V% | | 0 R% | |

Les deux colonnes de gauche correspondent à la configuration de commutation OFF-OFF. Comme on le voit la composante verte "V" subit une atténuation y en d et une atténuation z en j pour être observable en l avec un coefficient d'atténuation yz. De même, la composante rouge "R", subit une atténuation y en b et une atténuation z en l de sorte qu'elle est observable avec une atténuation yz. Les deux composantes ayant le même taux d'atténuation, la lumière naturelle est reconstituée et le cadran clair 17 est visible.

Dans la configuration ON-OFF correspondant aux deux colonnes de droite, la composante verte "V" correspondant aux deux colonnes de droite, la composante verte "V" subit successivement les atténuations y en d, z en i et x en l pour apparaître à l'observateur avec un taux xyz d'atténuation. La composante rouge subit une atténuation y en b en étant polarisée parallèlement au polariseur sélectif 11, puis une atténuation x en d. Son axe de polarisation est tourné de 90° sur e, e sorte qu'elle frappe le polariseur absorbant 15 perpendiculairement à son axe de polarisation et qu'elle est totalement absorbée. Dans cette configuration de commutation la couleur verte est la couleur dominante des segments commutés, donc de l'information affichée qui apparaît en vert sur fond clair de cadran.

**Tableau 5**

| | | | C26, OFF / V28, ON | | | | C26, ON / V28, ON | | | |
|---|---|---|---|---|---|---|---|---|---|---|
| | | a | | ∗ | R | ∗ | V | ∗ | R | ∗ |
| P11 ↕ | | | | | | | | | | |
| | | b | V | ∗ | yR | ↕ | V | ∗ | yR | ↕ |
| C26 | | | | | | | | | | |
| | | c | V | * | yR | ↔ | V | ∗ | yR | ↕ |
| P13 ↔ | | | | | | | | | | |
| | | d | yV | ↔ | yR | ↔ | yV | ↔ | xyR | ↕ |
| V28 | | | | | | | | | | |
| | | e | yV | ↔ | yR | ↔ | yV | ↔ | xyR | ↕ |
| P15 ↕ | | | | | | | | | | |
| | | f | | | | | | | xyR | ↕ |
| Cadran 17 | | | | | | | | | | |
| | | g | | | | | | | xyR | ↕ |
| P15 | | | | | | | | | | |
| | | h | | | | | | | xyR | ↕ |
| V28 | | | | | | | | | | |
| | | i | | | | | | | xyR | ↕ |
| P13 ↔ | | | | | | | | | | |
| | | j | | | | | | | x²yR | ↕ |
| C26 | | | | | | | | | | |
| | | k | | | | | | | x²yR | ↕ |
| P11 ↕ | | | | | | | | | | |
| | | l | | | | | | | x²yzR | ↕ |
| | | | | | | | | | | |
| Exemple taux atténuation en % | | | 0 V% | | 0 R% | | 0 V% | | 0,08 R% | |

Les deux colonnes de gauche correspondent à la configuration de commutation OFF-ON. Comme on le voit, les deux composantes verte "V" et rouge "R" arrivent sur le polariseur absorbant 15 avec une polarisation perpendiculaire à l'axe de polarisation dudit polariseur, de sorte qu'elle sont toutes les deux absorbées et que le fond apparaît sombre.

Dans la configuration ON-ON correspondant aux deux colonnes de droite, la composante verte "V" est totalement absorbée et la composante rouge "R" subit une atténuation x²yz. Dans cette configuration de commutation, la couleur rouge est la couleur dominante des segments commutés, donc de l'information affichée qui apparaît en rouge sur fond sombre.

Ce mode de réalisation permet donc, en passant d'une configuration de commutation ON-OFF à une configuration ON-ON d'avoir une inversion chromatique de l'information affichée de vert sur fond clair, à rouge sur fond sombre.

Comme cela a été expliqué aux exemples 2, 3 et 4, on obtiendra encore une inversion chromatique en changeant l'ordre des polariseurs sélectifs de couleur et/ou leur axe de polarisation relatif.

Il est également envisageable que le premier dispositif d'affichage 22 ait, totalement ou partiellement, la même structure que celle du deuxième dispositif d'affichage 24.

## Revendications

1. Ensemble d'affichage à inversion chromatique et de contraste comprenant un premier dispositif d'affichage (22) réfléchissant à l'avant duquel est disposé un deuxième dispositif d'affichage (24) actif à cristaux liquides comprenant, en partant de l'extérieur, un polariseur avant (11), une cellule d'affichage (26) matriciel ou à segments à cristaux liquides LC₁ ayant deux états (ON/OFF) de commutation, un polariseur intermédiaire (13), une valve optique (28) à cristaux liquides LC₂ ayant deux états (ON/OFF) de commutation et un polariseur arrière (15), les quatre configurations de commutation desdites cellule (26) et valve (28) étant déterminées par une unité de gestion (23), **caractérisé en ce que** dans le deuxième dispositif d'affichage (24), le polariseur avant (11) est sélectif d'une première couleur "V", le polariseur intermédiaire (13) est sélectif d'une deuxième couleur "R" et le polariseur arrière est réflectif lorsque le premier dispositif d'affichage (22) a une teinte sombre et absorbant lorsque le premier dispositif d'affichage (22) a une teinte claire, et **en ce que** l'unité de gestion (23) permet de sélectionner deux configurations de commutation permettant d'inverser la couleur de l'information affichée et/ou celle du fond sur lequel ladite information est affichée.

2. Ensemble d'affichage selon la revendication 1, **caractérisé en ce que** le polariseur intermédiaire (13) est croisé avec le polariseur avant (11) et le polariseur arrière (15), la cellule (26) est dans l'état ON et **en ce que** le changement d'état de la valve (28) d'un état ON à un état OFF, ou inversement, inverse les couleurs de l'information donnée par le deuxième affichage (24).

3. Ensemble d'affichage selon la revendication 1, **caractérisé en ce que** les polariseurs avant (11), intermédiaire (13) et arrière (15) sont parallèles, la cellule (26) est dans l'état OFF et **en ce que** le changement d'état de la valve (28) d'un état ON à un état OFF, ou inversement, inverse les couleurs du fond sur lequel apparaissent les informations du deuxième affichage.

4. Ensemble d'affichage selon l'une quelconque des revendications 1 à 3, **caractérisé en ce que** les première et deuxième couleurs "V", "G" des polariseurs sélectifs (11, 13) sont des couleurs complémentaires.

5. Ensemble d'affichage selon les revendications 2 ou 3, **caractérisé en ce que** les deux autres configurations de commutation permettent de rendre visible soit le premier affichage (22), soit de masquer totalement ledit premier affichage (22).

6. Ensemble d'affichage selon la revendication 1, **caractérisé en ce que** la valve (28) comprend au moins deux zones distinctes ayant des configurations de commutation inversées permettant d'afficher deux types d'information en inversion chromatique.

7. Ensemble d'affichage selon la revendication 1, **caractérisé en ce que** les cristaux liquides LC₁ et LC₂ sont de type nématique à hélice, indifféremment à anisotropie positive ou négative, en étant identiques ou différents dans la cellule et dans la valve.

8. Ensemble d'affichage selon l'une quelconque des revendications 1 à 7, **caractérisé en ce que** le premier dispositif d'affichage (22) est choisi parmi un dispositif d'affichage analogique, un dispositif d'affichage digital et une combinaison de ces deux dispositifs pouvant en outre comporter un élément décoratif.

9. Ensemble d'affichage selon la revendication 1, **caractérisé en ce que** le premier dispositif d'affichage (22) a, totalement ou partiellement, la même structure que celle du deuxième dispositif d'affichage (24).

10. Pièce d'horlogerie comprenant une boîte fermée par une glace (20) et un fond (3) dans laquelle est logé un mouvement d'horlogerie associé à au moins un dispositif d'affichage selon l'une quelconque des revendications 1 à 9, ledit premier dispositif d'affichage (22) affichant essentiellement des grandeurs temporelles et ledit deuxième dispositif d'affichage (24) affichant des grandeurs temporelles complémentaires ou des grandeurs non temporelles de systèmes capteurs contenus dans la boîte de ladite pièce d'horlogerie.

11. Pièce d'horlogerie selon la revendication 10, **caractérisé en ce que** le premier dispositif d'affichage (22) est de type analogique.

12. Pièce d'horlogerie selon la revendication 10, **caractérisé en ce que** le deuxième dispositif (24) d'affichage est confondu avec la glace (20).

## Patentansprüche

1. Anzeigeeinheit mit Farb- und Kontrastumkehrung, die eine reflektierende erste Anzeigevorrichtung (22) umfasst, vor der eine zweite aktive Flüssigkristall-Anzeigevorrichtung (24) angeordnet ist, die, von außen beginnend, einen vorderen Polarisator (11), eine Anzeigezelle (26), die matrixförmig ist oder Flüssigkristallsegmente LC₁ aufweist und zwei Schaltzustände (EIN/AUS) besitzt, einen Zwischenpolarisator (13), ein Lichtventil (28), das Flüssigkristalle LC₂ aufweist und zwei Schaltzustände (EIN/AUS) besitzt, und einen hinteren Polarisator (15) umfasst, wobei die vier Schaltkonfigurationen der Zelle (26) und des Ventils (28) durch eine Steuereinheit (23) bestimmt werden, **dadurch gekennzeichnet, dass** in der zweiten Anzeigevorrichtung (24) der vordere Polarisator (11) für eine erste Farbe "V" selektiv ist, der Zwischenpolarisator (13) für eine zweite Farbe "R" selektiv ist und der hintere Polarisator reflektierend ist, wenn die erste Anzeigevorrichtung (22) eine dunkle Tönung besitzt, und absorbierend ist, wenn die erste Anzeigevorrichtung (22) eine helle Tönung besitzt, und dass die Steuereinheit (23) ermöglicht, zwei Schaltkonfigurationen auszuwählen, was ermöglicht, die Farbe der angezeigten Informationen und/oder jene des Hintergrundes, vor dem die Informationen angezeigt werden, umzukehren.

2. Anzeigeeinheit nach Anspruch 1, **dadurch gekennzeichnet, dass** dann, wenn der Zwischenpolarisator (13) mit dem vorderen Polarisator (11) und dem hinteren Polarisator (15) gekreuzt ist, die Zelle (26) im EIN-Zustand ist und das der Wechsel des Zustands des Ventils (28) von einem EIN-Zustand in einen AUS-Zustand oder umgekehrt die Farben der durch die zweite Anzeige (24) angegebenen Informationen umkehrt.

3. Anzeigeeinheit nach Anspruch 1, **dadurch gekennzeichnet, dass** dann, wenn der vordere Polarisator (11), der Zwischenpolarisator (13) und der hintere Polarisator (15) parallel zueinander sind, die Zelle (26) im AUS-Zustand ist und dass der Wechsel des Zustands des Ventils (28) von einem EIN-Zustand in einen AUS-Zustand oder umgekehrt die Farben des Hintergrundes, vor dem die Informationen der zweiten Anzeige erscheinen, umkehrt.

4. Anzeigeeinheit nach einem der Ansprüche 1 bis 3, **dadurch gekennzeichnet, dass** die erste und die zweite Farbe "V", "G" der selektiven Polarisatoren (11, 13) Komplementärfarben sind.

5. Anzeigeeinheit nach den Ansprüchen 2 oder 3, **dadurch gekennzeichnet, dass** die zwei anderen Schaltkonfigurationen ermöglichen, entweder die erste Anzeige (22) sichtbar zu machen oder die erste Anzeige (22) vollständig auszublenden.

6. Anzeigeeinheit nach Anspruch 1, **dadurch gekennzeichnet, dass** das Ventil (28) mindestens zwei verschiedene Bereiche aufweist, die umgekehrte Schaltkonfigurationen besitzen, was ermöglicht, zwei Arten von Informationen in Farbumkehr anzuzeigen.

7. Anzeigeeinheit nach Anspruch 1, **dadurch gekennzeichnet, dass** die Flüssigkristalle LC₁ und LC₂ vom schraubenförmig nematischen Typ mit gleichermaßen positiver oder negativer Anisotropie sind, wobei sie in der Zelle und in dem Ventil gleich oder unterschiedlich sind.

8. Anzeigeeinheit nach einem der Ansprüche 1 bis 7, **dadurch gekennzeichnet, dass** die erste Anzeigevorrichtung (22) aus einer analogen Anzeigevorrichtung, einer digitalen Anzeigevorrichtung und einer Kombination aus diesen zwei Vorrichtungen, die außerdem ein Zierelement aufweisen können, gewählt ist.

9. Anzeigeeinheit nach Anspruch 1, **dadurch gekennzeichnet, dass** die erste Anzeigevorrichtung (22) ganz oder zum Teil die gleiche Struktur wie jene der zweiten Anzeigevorrichtung (24) hat.

10. Zeitmessgerät, das ein Gehäuse aufweist, das durch ein Uhrenglas (20) und einen Boden (3) verschlossen ist und in dem ein Uhrwerk aufgenommen ist, dem wenigstens eine Anzeigevorrichtung nach einem der Ansprüche 1 bis 9 zugeordnet ist, wobei die erste Anzeigevorrichtung (22) im Wesentlichen Zeitgrößen anzeigt und die zweite Anzeigevorrichtung (24) komplementäre Zeitgrößen oder nicht zeitliche Größen von Sensorsystemen, die im Gehäuse des Zeitmessgeräts enthalten sind, anzeigt.

11. Zeitmessgerät nach Anspruch 10, **dadurch gekennzeichnet, dass** die erste Anzeigevorrichtung (22) vom analogen Typ ist.

12. Zeitmessgerät nach Anspruch 10, **dadurch gekennzeichnet, dass** die zweite Anzeigevorrichtung (24) mit dem Uhrenglas (20) verbunden ist.

## Claims

1. Chromatic contrast inversion display assembly including a first display device (22) in front of which is arranged a second active liquid crystal display device (24) including, starting from the exterior, a front polariser (11), a liquid crystal LC₁ dot-matrix or digit display cell with two switching states (ON/OFF), an intermediate polariser (13), a liquid crystals LC₂ optical valve (28) having at least two switching states (ON/OFF) and a rear polariser (15), the four switching states of said cell (26) and said valve (28) being determined by a control unit (23), **characterised in that** in the second display device (24), the front polariser (11) is selective of a first colour " V ", the intermediate polariser (13) is selective of a second colour "R" and the rear polariser is reflective when the first display device (32) has a dark background and absorbent when the first display device (22) has a light background and **in that** the control unit (23) allows two switching states to be selected allowing the colour of the information displayed, or that of the background on which said information is displayed to be reversed.

2. Display assembly according to claim 1, **characterised in that** the intermediate polariser (13) is crossed with respect to the front polariser (11) and the rear polariser (15), the cell (26) is in the ON state and **in that** the change of state of the valve (28) from an ON state to an OFF state, or conversely, reverses the colours of the information given by the second display device (24).

3. Display assembly according to claim 1, **characterised in that** the front (11), intermediate (13) and rear (15) polarisers are parallel, the cell (26) is in the OFF state and **in that** the change of state of the valve (28) from an ON state to an OFF state, or conversely, reverses the colours of the background on which the information of the second display device appears.

4. Display assembly according to any of claims 1 to 3, **characterised in that** the first and second colours "V", "G" " of the selective polarisers (11, 13) are complementary colours.

5. Display assembly according to claims 2 or 3, **characterised in that** the two other switching configurations allow either the first display device (22) to be made visible or said first display device (22) to be totally masked.

6. Display assembly according to claim 1, **characterised in that** the valve (28) includes at least two distinct zones having opposite switching configurations allowing two types of information to be displayed in chromatic inversion.

7. Display assembly according to claim 1, **characterised in that** the liquid crystals LC₁ and LC₂ of the cell (26) and of the valve (28) which are the same or different, are of the twisted nematic type with either a positive or a negative anisotropy.

8. Display assembly according to any of claims 1 to 7, **characterised in that** the first display device (22) is selected from among an analogue display device, a digital display device and a combination of these two devices being also able to include a decorative element.

9. Display assembly according to claim 1, **characterised in that** the first display device (22) has, totally or partially, the same structure as that of the second display device (24).

10. Timepiece including a case closed by a crystal (20) and a back cover (3) in which is housed a watch movement associated with at least a display device according to any of claims 1 to 9, said first display device (22) displaying essentially time-related information and said second display device (24) displaying complementary time-related information or non time-related information of sensor systems contained in the case of said timepiece.

11. Timepiece according to claim 10, **characterised in that** the first display device (22) is of the analogue type.

12. Timepiece according to claim 10, **characterised in that** the second display device (24) is integral with the crystal (20).
